(19) **Europäisches Patentamt**
**European Patent Office**
**Office européen des brevets**

(11) **EP 4 663 498 A1**

(12) **EUROPEAN PATENT APPLICATION**
published in accordance with Art. 153(4) EPC

(43) Date of publication:
**17.12.2025 Bulletin 2025/51**

(51) International Patent Classification (IPC):
**B60W 40/09** (2012.01)

(21) Application number: **23924603.6**

(52) Cooperative Patent Classification (CPC):
**B60W 40/09**

(22) Date of filing: **28.02.2023**

(86) International application number:
**PCT/CN2023/078813**

(87) International publication number:
**WO 2024/178631 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Shenzhen Yinwang Intelligent Technologies Co., Ltd.**
**Shenzhen, Guangdong 518110 (CN)**

(72) Inventors:
• **LIANG, Yixiao**
**Shenzhen, Guangdong 518129 (CN)**
• **LIU, Donghao**
**Shenzhen, Guangdong 518129 (CN)**
• **LUO, Jie**
**Shenzhen, Guangdong 518129 (CN)**
• **ZHANG, Yongsheng**
**Shenzhen, Guangdong 518129 (CN)**

(74) Representative: **Maiwald GmbH**
**Engineering**
**Elisenhof**
**Elisenstrasse 3**
**80335 München (DE)**

(54) **DRIVING STYLE RECOGNITION METHOD AND APPARATUS, AND STORAGE MEDIUM**

(57) A driving style recognition method and apparatus, and a storage medium are provided. The method includes: obtaining driving data in response to a requirement of a target electronic control function of a vehicle, where the driving data indicates a driving status of the vehicle; and inputting the driving data to a target driving style model, to determine a driving style matching the target electronic control function, where the target driving style model is a driving style model matching the target electronic control function among a plurality of driving style models, and the driving style matching the target electronic control function is used for determining a control policy for the target electronic control function. Driving style models can be correspondingly provided for different functions according to requirements and characteristics of the functions. This is more flexible. In this way, the driving style matching the target electronic control function can be determined, so that the control policy for the electronic control function is determined in a more targeted manner, and personalization during driving is improved.

S301
Obtain sample data

S302
Determine, according to a feature selection method, a second feature parameter among a plurality of feature parameters and an evaluation value corresponding to the second feature parameter

S303
For any target electronic control function, determine, from the second feature parameter, a first feature parameter associated with the target electronic control function

S304
Obtain, through training based on the first feature parameter associated with the target electronic control function and an evaluation value of the first feature parameter, a target driving style model associated with the target electronic control function

FIG. 3

**Description**

**TECHNICAL FIELD**

This application relates to the field of artificial intelligence (artificial intelligence, AI) technologies, and in particular, to a driving style recognition method and apparatus, and a storage medium.

**BACKGROUND**

With continuous development of AI technologies, in a vehicle driving scenario, for example, recognizing a driving style of a driver by using an AI technology has attracted increasing attention in recent years. Recognizing a driving style of a driver during vehicle driving is of great significance to improve driving safety, comfort, personalization, and cost-effectiveness. In addition, this manner can be strongly perceived by a user. This is helpful for building a style and a reputation of a brand.

However, there are quite many factors affecting a driving style, and different functions have different requirements for defining a driving style. Therefore, it is difficult to formulate a unified standard. In addition, in a current solution, different types of parameters are usually selected to perform overall classification and recognition on a driving style of a driver. After overall style recognition is completed, all functions adaptively adjusted based on the driving style depend on an overall style recognition result. However, a driving style of a driver is usually quite complex. For example, some drivers step on an accelerator or a brake hastily, but performs steering steadily. However, a current driving style recognition method cannot cope with this case. Therefore, a new driving style recognition method with higher flexibility and a wider application coverage is urgently needed, to improve personalization during vehicle driving.

**SUMMARY**

In view of this, a driving style recognition method and apparatus, and a storage medium are provided.

According to a first aspect, an embodiment of this application provides a driving style recognition method. The method includes:

obtaining driving data in response to a requirement of a target electronic control function of a vehicle, where the driving data indicates a driving status of the vehicle; and

inputting the driving data to a target driving style model, to determine a driving style matching the target electronic control function, where the target driving style model is a driving style model matching the target electronic control function among a plurality of driving style models, and the driving style matching the target electronic control function is used for determining a control policy for the target electronic control function.

According to this embodiment of this application, in response to the requirement of the target electronic control function of the vehicle, the obtained driving data is input to the target driving style model matching the target electronic control function, so that driving style models can be correspondingly provided for different functions according to requirements and characteristics of the functions. This is more flexible. In this way, the driving style matching the target electronic control function can be determined, so that the recognized driving style is more accurate and reliable and better adapts to the requirement of the target electronic control function. In addition, a control policy can be determined for the electronic control function in a more targeted manner, so that personalization during driving is improved.

According to the first aspect, in a first possible implementation of the driving style recognition method, the target driving style model is obtained through training based on a first feature parameter associated with the target electronic control function and an evaluation value of the first feature parameter, and the evaluation value indicates a degree of importance of the feature parameter during determining of the driving style.

According to this embodiment of this application, the target driving style model is obtained through training based on the first feature parameter associated with the target electronic control function and the evaluation value of the first feature parameter, so that the model obtained through training can better adapt to the target electronic control function, and can more truly and accurately indicate a driving style of a driver in the function. In this way, a corresponding control policy can be more accurately formulated, to improve driving experience.

According to the first possible implementation of the first aspect, in a second possible implementation of the driving style recognition method, the method may further include:

obtaining sample data, where the sample data includes a plurality of feature parameters indicating a driving status of the vehicle;

determining, according to a feature selection method, a second feature parameter among the plurality of feature parameters and an evaluation value corresponding to the second feature parameter;

for any target electronic control function, determining, from the second feature parameter, a first feature parameter associated with the target electronic control function; and

obtaining, through training based on the first feature parameter associated with the target electronic control function and an evaluation value of the first feature parameter, the target driving style model associated with the target electronic control function.

According to this embodiment of this application, the sample data is obtained; a plurality of second feature parameters and evaluation values of the plurality of second feature parameters are determined according to the feature selection method; for any target electronic control function, a first feature parameter associated with the target electronic control function is determined from the second feature parameters, so that a subsequent training process is more targeted; and a target driving style model associated with the target electronic control function is obtained through training based on the first feature parameter and an evaluation value of the first feature parameter, so that the model obtained through training can better adapt to the target electronic control function, and can more truly and accurately indicate a driving style of a driver in the function, and subsequent driving style recognition has higher flexibility, a wider coverage, and higher personalization.

According to the second possible implementation of the first aspect, in a third possible implementation of the driving style recognition method, the obtaining, through training based on the first feature parameter associated with the target electronic control function and an evaluation value of the first feature parameter, the target driving style model associated with the target electronic control function includes:

determining a weight of a non-dimensionalized first feature parameter based on the evaluation value of the first feature parameter;

performing clustering based on the first feature parameter and the weight of the non-dimensionalized first feature parameter, to obtain a clustering result; and

obtaining the target driving style model through training based on the clustering result.

According to this embodiment of this application, clustering is performed based on the first feature parameter and the weight of the non-dimensionalized first feature parameter, to obtain the clustering result, and the target driving style model is obtained through training based on the clustering result. A unit dimension difference between weights of first feature parameters can be considered, so that the clustering result is more accurate. In this way, driving style models matching different electronic control functions of the vehicle can be independently determined for the electronic control functions, so that driving styles can be subsequently recognized for different functions by using different models, to improve precision of a recognition result.

According to the second or the third possible implementation of the first aspect, in a fourth possible implementation of the driving style recognition method, the determining, according to a feature selection method, a second feature parameter among the plurality of feature parameters and an evaluation value corresponding to the second feature parameter includes:

separately scoring feature parameters in a plurality of pieces of sample data, and determining a plurality of second feature parameters in the plurality of pieces of sample data and a first weight vector of the second feature parameters;

for any piece of sample data, separately scoring second feature parameters in a neighbor set of the sample data, and determining a second weight vector corresponding to a plurality of second feature parameters in the sample data; and

determining, based on the first weight vector and the second weight vector, evaluation values respectively corresponding to the plurality of second feature parameters.

According to this embodiment of this application, the feature parameters in the sample data are separately scored by using a fusion feature selection method, to obtain the first weight vector, and the second feature parameters in the neighbor set of the sample data are separately scored to obtain the second weight vector, so that good selectivity can be achieved for both a single feature and a feature combination. The evaluation values of the second feature parameters are determined based on the first weight vector and the second weight vector, so that the obtained evaluation values are more reliable, and a more accurate driving style model can be subsequently established based on this.

According to the fourth possible implementation of the first aspect, in a fifth possible implementation of the driving style recognition method, the first weight vector is determined according to a filter feature selection method, and the second weight vector is determined according to an embedded feature selection method.

According to this embodiment of this application, a more reliable feature selection and sorting mechanism can be established by combining advantages of the filter feature selection method and the embedded feature selection method, so that the second feature parameter selected through feature selection and an importance measurement result corresponding to the second feature parameter are more objective and accurate, and a subsequently determined driving style model has higher precision.

According to the fourth or the fifth possible implementation of the first aspect, in a sixth possible implementation of the driving style recognition method, the determining, based on the first weight vector and the second weight vector, evaluation values respectively corresponding to the plurality of second feature parameters includes:

for any piece of sample data, determining, based on a product of the first weight vector and the second weight vector, evaluation values respectively corresponding to a plurality of second feature parameters in the sample data; and averaging evaluation values of the second feature parameters in the plurality of pieces of sample data, and determining the evaluation values respectively corresponding to the plurality of second feature parameters.

According to this embodiment of this application, the product of the first weight vector and the second weight vector is calculated, so that the evaluation values of the second feature parameters can be determined by combining advantages of a filter feature selection algorithm and an embedded feature selection algorithm. The evaluation values of the plurality of pieces of sample data are determined through traversal, and an average value is obtained as a final evaluation value, so that the finally determined evaluation value can be more accurate and reliable.

According to the fourth, the fifth, or the sixth possible implementation of the first aspect, in a seventh possible implementation of the driving style recognition method, the neighbor set of the sample data is determined based on a Manhattan distance between the sample data and other sample data.

According to this embodiment of this application, the neighbor set of the sample data can be more objectively determined by using the Manhattan distance between sample data, so that the evaluation values of the second feature parameters can be more accurately determined.

According to the fourth, the fifth, the sixth, or the seventh possible implementation of the first aspect, in an eighth possible implementation of the driving style recognition method, the neighbor set of the sample data includes the sample data, a homogeneous neighbor set of the sample data, and a heterogeneous neighbor set of the sample data.

According to this embodiment of this application, a neighbor range of the sample data can be more comprehensively considered, to accurately determine the evaluation values of the second feature parameters in the neighbor set of the sample data.

According to the first aspect or the first, the second, the third, the fourth, the fifth, the sixth, the seventh, or the eighth possible implementation of the first aspect, in a ninth possible implementation of the driving style recognition method, the target electronic control function is any one of chassis electronic control functions of the vehicle, or the target electronic control function is any one of driver assistance functions of the vehicle.

According to this embodiment of this application, a driving style of the driver in a corresponding function can be determined according to requirements and characteristics of different electronic control functions of the vehicle, so that different control policies are more accurately and flexibly used for different functions, to improve personalization of the vehicle.

According to the first, the second, the third, the fourth, the fifth, the sixth, the seventh, the eighth, or the ninth possible implementation of the first aspect, in a tenth possible implementation of the driving style recognition method, the feature parameter includes one or more of the following: a parameter of a brake operation, a parameter of a steering wheel operation, a parameter of an acceleration/deceleration operation, and a vehicle traveling parameter.

According to this embodiment of this application, impact of different types of driving data on a driving style can be more comprehensively considered, so that a recognized driving style can be more accurate.

According to a second aspect, an embodiment of this application provides a driving style recognition apparatus. The apparatus includes:

a first obtaining module, configured to obtain driving data in response to a requirement of a target electronic control function of a vehicle, where the driving data indicates a driving status of the vehicle; and
a first determining module, configured to input the driving data to a target driving style model, to determine a driving style matching the target electronic control function, where the target driving style model is a driving style model matching the target electronic control function among a plurality of driving style models, and the driving style matching the target electronic control function is used for determining a control policy for the target electronic control function.

According to the second aspect, in a first possible implementation of the driving style recognition apparatus, the target driving style model is obtained through training based on a first feature parameter associated with the target electronic control function and an evaluation value of the first feature parameter, and the evaluation value indicates a degree of importance of the feature parameter during determining of the driving style.

According to the first possible implementation of the second aspect, in a second possible implementation of the driving style recognition apparatus, the apparatus may further include:

a second obtaining module, configured to obtain sample data, where the sample data includes a plurality of feature parameters indicating a driving status of the vehicle;

a second determining module, configured to determine, according to a feature selection method, a second feature parameter among the plurality of feature parameters and an evaluation value corresponding to the second feature parameter;

a third determining module, configured to: for any target electronic control function, determine, from the second feature parameter, a first feature parameter associated with the target electronic control function; and

a training module, configured to obtain, through training based on the first feature parameter associated with the target electronic control function and an evaluation value of the first feature parameter, the target driving style model associated with the target electronic control function.

According to the second possible implementation of the second aspect, in a third possible implementation of the driving style recognition apparatus, the training module is configured to:

determine a weight of a non-dimensionalized first feature parameter based on the evaluation value of the first feature parameter;

perform clustering based on the first feature parameter and the weight of the non-dimensionalized first feature parameter, to obtain a clustering result; and

obtain the target driving style model through training based on the clustering result.

According to the second or the third possible implementation of the second aspect, in a fourth possible implementation of the driving style recognition apparatus, the second determining module is configured to:

separately score feature parameters in a plurality of pieces of sample data, and determine a plurality of second feature parameters in the plurality of pieces of sample data and a first weight vector of the second feature parameters;

for any piece of sample data, separately score second feature parameters in a neighbor set of the sample data, and determine a second weight vector corresponding to a plurality of second feature parameters in the sample data; and

determine, based on the first weight vector and the second weight vector, evaluation values respectively corresponding to the plurality of second feature parameters.

According to the fourth possible implementation of the second aspect, in a fifth possible implementation of the driving style recognition apparatus, the first weight vector is determined according to a filter feature selection method, and the second weight vector is determined according to an embedded feature selection method.

According to the fourth or the fifth possible implementation of the second aspect, in a sixth possible implementation of the driving style recognition apparatus, the determining, based on the first weight vector and the second weight vector, evaluation values respectively corresponding to the plurality of second feature parameters includes:

for any piece of sample data, determining, based on a product of the first weight vector and the second weight vector, evaluation values respectively corresponding to a plurality of second feature parameters in the sample data; and

averaging evaluation values of the second feature parameters in the plurality of pieces of sample data, and determining the evaluation values respectively corresponding to the plurality of second feature parameters.

According to the fourth, the fifth, or the sixth possible implementation of the second aspect, in a seventh possible implementation of the driving style recognition apparatus, the neighbor set of the sample data is determined based on a Manhattan distance between the sample data and other sample data.

According to the fourth, the fifth, the sixth, or the seventh possible implementation of the second aspect, in an eighth possible implementation of the driving style recognition apparatus, the neighbor set of the sample data includes the sample data, a homogeneous neighbor set of the sample data, and a heterogeneous neighbor set of the sample data.

According to the second aspect or the first, the second, the third, the fourth, the fifth, the sixth, the seventh, or the eighth possible implementation of the second aspect, in a ninth possible implementation of the driving style recognition apparatus, the target electronic control function is any one of chassis electronic control functions of the vehicle, or the target electronic control function is any one of driver assistance functions of the vehicle.

According to the first, the second, the third, the fourth, the fifth, the sixth, the seventh, the eighth, or the ninth possible implementation of the second aspect, in a tenth possible implementation of the driving style recognition apparatus, the feature parameter includes one or more of the following: a parameter of a brake operation, a parameter of a steering wheel operation, a parameter of an acceleration/deceleration operation, and a vehicle traveling parameter.

According to a third aspect, an embodiment of this application provides a driving style recognition apparatus, including a processor and a memory. The memory is configured to store a program. The processor is configured to execute the program stored in the memory, so that the apparatus implements the driving style recognition method according to one or more of the first aspect or the plurality of possible implementations of the first aspect.

According to a fourth aspect, an embodiment of this application provides a terminal device. The terminal device may perform the driving style recognition method according to one or more of the first aspect or the plurality of possible implementations of the first aspect.

According to a fifth aspect, an embodiment of this application provides a computer-readable storage medium. The computer-readable storage medium stores program instructions. When the program instructions are executed by a computer, the computer is enabled to implement the driving style recognition method according to one or more of the first aspect or the plurality of possible implementations of the first aspect.

According to a sixth aspect, an embodiment of this application provides a computer program product, including program instructions. When the program instructions are executed by a computer, the computer is enabled to implement the driving style recognition method according to one or more of the first aspect or the plurality of possible implementations of the first aspect.

These aspects and other aspects of this application are more concise and comprehensible in descriptions of the following (a plurality of) embodiments.

## BRIEF DESCRIPTION OF DRAWINGS

Accompanying drawings included in this specification as a part of this specification, together with this specification, show example embodiments, features, and aspects of this application, and are intended to explain principles of this application.

FIG. 1 is a diagram of an application scenario according to an embodiment of this application;
FIG. 2 is a flowchart of a driving style recognition method according to an embodiment of this application;
FIG. 3 is a flowchart of a driving style recognition method according to an embodiment of this application;
FIG. 4 is a flowchart of a driving style recognition method according to an embodiment of this application;
FIG. 5 is a flowchart of a driving style recognition method according to an embodiment of this application;
FIG. 6 is a diagram of an architecture of a feature selection method according to an embodiment of this application;
FIG. 7 is a flowchart of a driving style recognition method according to an embodiment of this application;
FIG. 8(a) is a diagram of a weighted coordinate system according to an embodiment of this application;
FIG. 8(b) is a diagram of a weighted coordinate system according to an embodiment of this application;
FIG. 8(c) is a diagram of a weighted coordinate system according to an embodiment of this application;
FIG. 9 is a diagram of a structure of a driving style recognition apparatus according to an embodiment of this application; and
FIG. 10 is a diagram of a structure of an electronic device 100 according to an embodiment of this application.

## DESCRIPTION OF EMBODIMENTS

The following describes various example embodiments, features, and aspects of this application in detail with reference to the accompanying drawings. Identical reference signs in the accompanying drawings indicate elements that have same or similar functions. Although various aspects of embodiments are illustrated in the accompanying drawings, the accompanying drawings are not necessarily drawn in proportion unless otherwise specified.

The specific term "example" herein means "being used as an example, embodiment, or illustration". Any embodiment described as an "example" herein is not necessarily construed as being superior to or better than other embodiments.

In addition, to better describe this application, many specific details are given in the following specific implementations. A person skilled in the art should understand that this application can also be implemented without some specific details. In some examples, methods, means, elements, and circuits that are well-known to a person skilled in the art are not described in detail, so that the subject matter of this application is highlighted.

With continuous development of AI technologies, in a vehicle driving scenario, for example, recognizing a driving style of a driver by using an AI technology has attracted increasing attention in recent years. Recognizing a driving style of a driver during vehicle driving is of great significance to improve driving safety, comfort, personalization, and cost-effectiveness. In addition, this manner can be strongly perceived by a user. This is helpful for building a style and a reputation of a brand. However, there are quite many factors affecting a driving style, and different functions have different requirements for defining a driving style. Therefore, it is difficult to formulate a unified standard. In addition, in a current solution, different types of parameters are usually selected to perform overall classification and recognition on a driving style of a driver. After overall style recognition is completed, all functions adaptively adjusted based on the driving style depend on an overall style recognition result. However, a driving style of a driver is usually quite complex. For example, some drivers step on an accelerator or a brake hastily, but performs steering steadily. However, a current driving style recognition method cannot cope with this case. Therefore, a new driving style recognition method with higher flexibility and a wider application coverage is urgently needed, to improve personalization during vehicle driving.

To resolve the foregoing technical problem, this application provides a driving style recognition method. According to the driving style recognition method in embodiments of this application, a driving style model matching a corresponding electronic control function can be provided according to requirements of different electronic control functions of a vehicle, so that driving style models are correspondingly provided for different functions according to requirements and characteristics of the functions. This is more flexible. In this way, a driving style matching a corresponding electronic control function can be recognized by inputting driving data to a corresponding driving style model. The recognized driving style is more accurate and reliable and better adapts to a requirement of the current electronic control function, so that a control policy can be determined for the electronic control function in a more targeted manner, and personalization during driving is improved.

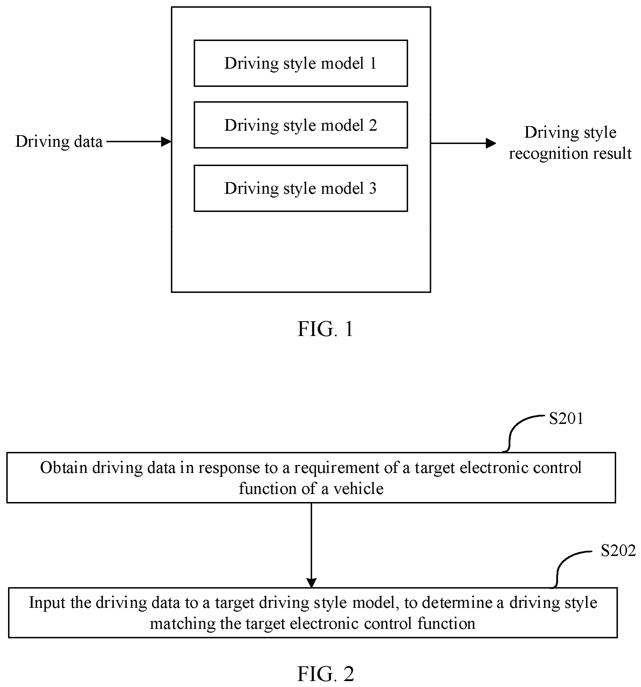

FIG. 1 is a diagram of an application scenario according to an embodiment of this application. The driving style recognition method in embodiments of this application may be applied to a vehicle driving scenario. As shown in FIG. 1, a plurality of driving style models, for example, driving style models 1 to 3 in the figure, may be generated by using the driving style recognition method in embodiments of this application. These driving style models may respectively match different electronic control functions of a vehicle. For example, the driving style model 1 may match an electric power steering function, the driving style model 2 may match an accelerator pedal feel function, and the driving style model 3 may match a brake assistance function.

These driving style models may be deployed on a vehicle. In this way, in a process of driving the vehicle by a driver, in response to a requirement for controlling a corresponding electronic control function, driving data may be obtained, and the driving data is input to a driving style model matching the electronic control function, to output a driving style recognition result. A control policy may be formulated for the electronic control function based on a recognized driving style.

For example, when a control policy for the accelerator pedal feel function needs to be adjusted in a personalized manner based on the driving style of the driver, in response to the requirement, driving data may be obtained during driving by the driver, and the driving data is input to the driving style model 2 in the figure, to output a driving style recognition result. Based on the recognition result, if the driving style of the driver is conservative, the control policy for the accelerator pedal feel function may be correspondingly adjusted. For example, the control policy is adjusted, so that the driver needs to step deeper on an accelerator pedal during acceleration.

The method in embodiments of this application may be implemented by an on-board computing unit. The on-board computing unit may be built in an in-vehicle infotainment system on a vehicle. In this way, a driving style recognition process in embodiments of this application may be implemented in real time on the vehicle.

Alternatively, a driving style model training process may be implemented on a cloud server. After a driving style model matching a function is obtained through training, the trained model is deployed on the vehicle. Different driving style models may be respectively deployed in application layer software of controllers for functions matching the driving style models, to quickly and accurately recognize driving styles for the functions. These models may alternatively be iteratively updated in a cloud.

The cloud server may be a physical device or a virtual device such as a virtual machine or a container, and has a wireless communication function. The wireless communication function may be configured on a chip (system) or another component or assembly of the server. The server may be a device with a wireless connection function. The wireless connection function means that server may be connected to another server or a vehicle in a wireless connection mode such as Wi-Fi or Bluetooth. The server in this application may also have a function of performing communication through a wired connection. For example, the server in this application may be located in the cloud, and communicate with the vehicle to send trained driving style models to the vehicle.

The following describes in detail the driving style recognition method in embodiments of this application with reference to FIG. 2 to FIG. 8(c).

FIG. 2 is a flowchart of a driving style recognition method according to an embodiment of this application. The method may be applied to a vehicle. As shown in FIG. 2, the method includes the following steps.

Step S201: Obtain driving data in response to a requirement of a target electronic control function of the vehicle.

The target electronic control function may be any one of chassis electronic control functions of the vehicle, or the target electronic control function may be any one of driver assistance functions of the vehicle.

For example, the chassis electronic control functions of the vehicle may include a drive control function, a brake control function, a steering control function, and a vehicle body attitude control function, which may be further divided into an electric power steering function, a four-wheel steering control function, an anti-skid control function, a brake/accelerator pressure assistance control function (for example, a brake pedal feel function and an accelerator pedal feel function), and the like. The driver assistance functions (advanced driver assistance system, ADAS) of the vehicle may include an adaptive cruise function, an automatic emergency brake function, a lane keeping function, and the like.

The target electronic control function may be any one of the foregoing functions. For example, corresponding driving data may be obtained in response to a requirement for controlling the accelerator pedal feel function, to recognize a driving style of a current driver, and correspondingly adjust a control policy for the accelerator pedal feel function.

According to this embodiment of this application, a driving style of the driver in a corresponding function can be determined according to requirements and characteristics of different electronic control functions of the vehicle, so that different control policies are more accurately and flexibly used for different functions, to improve personalization of the vehicle.

The driving data may be data continuously obtained within a period of time, or may be data obtained intermittently. The driving data may indicate a driving status of the vehicle. For example, the driving data may be multi-dimensional feature data, and may include a plurality of feature parameters. The feature parameters may include one or more of the following: a parameter of a brake operation, a parameter of a steering wheel operation, a parameter of an acceleration/deceleration operation, and a vehicle traveling parameter.

The parameter of the brake operation includes, for example, a brake pedal displacement and a brake pedal speed. The parameter of the steering wheel operation includes, for example, a steering wheel turning angle and a steering wheel turning speed. The parameter of the acceleration/deceleration operation includes, for example, an accelerator pedal displacement and an accelerator pedal speed. The vehicle traveling parameter may include a vehicle speed, a lateral acceleration, a longitudinal acceleration, a longitudinal/lateral acceleration change rate, an electric cylinder pressure buildup rate, and the like.

The driving data may be associated with the target electronic control function. To be specific, different driving data may be obtained in response to different electronic control functions. For example, when the target electronic control function is the electric power steering function, the feature parameters in the obtained driving data may include the vehicle speed, the steering wheel turning angle, the lateral acceleration, the steering wheel turning speed, and the longitudinal acceleration. In this way, the driving data can adapt to a driving style model matching the target electronic control function, and a driving style of the driver can be recognized by inputting the driving data to the model.

According to this embodiment of this application, impact of different types of driving data on a driving style can be more comprehensively considered, so that a recognized driving style can be more accurate.

Step S202: Input the driving data to a target driving style model, to determine a driving style matching the target electronic control function.

For different electronic control functions, driving style models respectively matching the electronic control functions may be determined. The target driving style model may be a driving style model matching the target electronic control function among the plurality of driving style models. The driving style matching the target electronic control function may be used for determining a control policy for the target electronic control function.

For example, the driving style may be moderate, aggressive, or conservative. For example, the conservative driving style may indicate that a driving risk tolerance capability of the driver in a corresponding electronic control function is low, the aggressive driving style may indicate that a driving risk tolerance capability of the driver in a corresponding electronic control function is high, and the moderate driving style may indicate that a driving risk tolerance capability of the driver in a corresponding electronic control function falls between the driving risk tolerance capability of the conservative driving style and the driving risk tolerance capability of the aggressive driving style. The driving style model may indicate a vehicle driving style of the driver by determining different type labels. A manner of determining the control policy based on the driving style is not limited in this application, and may be implemented based on the conventional technology. The control policy may include: setting different control thresholds or control parameter values, or using different control algorithms.

For example, when the target electronic control function is the electric power steering function, a manner of formulating the control policy may be: setting a steering resistance parameter of a steering wheel based on the driving style. When it is recognized that a driving style of the driver during steering is conservative, the steering resistance parameter may be changed to increase a steering resistance of the steering wheel during steering by the driver. When it is recognized that a driving style is an aggressive, the parameter is changed to reduce a steering resistance of the steering wheel during steering by the driver.

According to this embodiment of this application, in response to the requirement of the target electronic control function of the vehicle, the obtained driving data is input to the target driving style model matching the target electronic control function, so that driving style models can be correspondingly provided for different functions according to requirements and characteristics of the functions. This is more flexible. In this way, the driving style matching the target electronic control function can be determined, so that the recognized driving style is more accurate and reliable and better adapts to the requirement of the target electronic control function. In addition, a control policy can be determined for the electronic control function in a more targeted manner, so that personalization during driving is improved.

The target driving style model may be obtained in a training stage of the driving style recognition method in this embodiment of this application. Driving styles of the driver in different functions may vary. For example, a same driver steps on an accelerator hastily, but performs steering steadily. If a same model is used to recognize driving styles for different electronic control functions, it is difficult to accurately classify or identify this case. Therefore, in the training stage, driving style models respectively matching different electronic control functions of the vehicle may be independently determined for the electronic control functions, so that driving styles can be recognized for different functions by using different models, to improve precision of a recognition result.

Optionally, the target driving style model may be obtained through training based on a first feature parameter associated with the target electronic control function and an evaluation value of the first feature parameter.

The evaluation value may indicate a degree of importance of the feature parameter during determining of the driving style. For example, a larger evaluation value may indicate a greater contribution of the corresponding first feature parameter to a driving style recognition result in the target driving style model.

The first feature parameter may be one or more feature parameters that is/are associated with the target electronic control function and that is/are determined from a plurality of second feature parameters. The second feature parameter may be a feature parameter obtained by performing feature selection on multi-dimensional sample data in the training stage. A process of determining the second feature parameter is subsequently described in detail. The first feature parameter and the second feature parameter may include one or more of the following: a parameter of a brake operation, a parameter of a steering wheel operation, a parameter of an acceleration/deceleration operation, and a vehicle traveling parameter.

According to this embodiment of this application, the target driving style model is obtained through training based on the first feature parameter associated with the target electronic control function and the evaluation value of the first feature parameter, so that the model obtained through training can better adapt to the target electronic control function, and can more truly and accurately indicate a driving style of a driver in the function. In this way, a corresponding control policy can be more accurately formulated, to improve driving experience.

The following describes in detail a training process of the method in embodiments of this application.

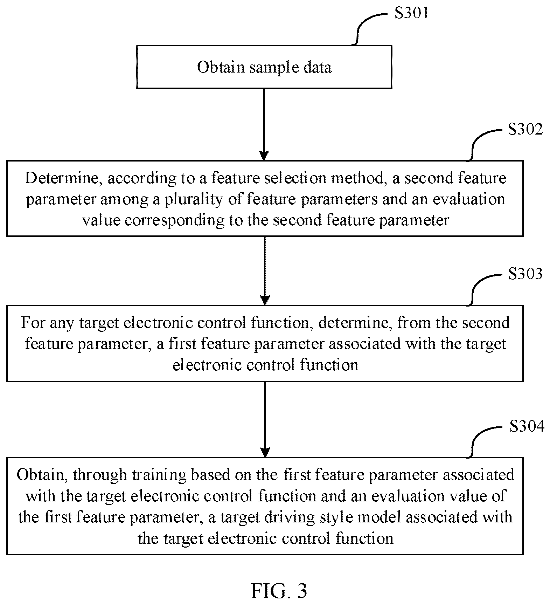

FIG. 3 is a flowchart of a driving style recognition method according to an embodiment of this application. The method may be applied to a vehicle or a cloud server. As shown in FIG. 3, the method includes the following steps.

Step S301: Obtain sample data.

The sample data may be data in a pre-obtained sample dataset. The sample data may include a plurality of feature parameters indicating a driving status of the vehicle. The sample data may be high-dimensional feature data (for example, including a 100-dimensional feature parameter). The feature parameter may be a parameter of a brake operation, a parameter of a steering wheel operation, a parameter of an acceleration/deceleration operation, a vehicle traveling parameter, or the like.

Step S302: Determine, according to a feature selection method, a second feature parameter among the plurality of feature parameters and an evaluation value corresponding to the second feature parameter.

The second feature parameter may be one or more feature parameters among the plurality of feature parameters. The evaluation value corresponding to the second feature parameter may indicate a degree of importance of the second feature parameter during determining of a driving style.

The following describes in detail the feature selection method in this embodiment of this application.

Because a driving style is affected by many factors, a conventional method usually lacks a unified standard for performing correlation measurement on a feature parameter and selecting a feature from a high-dimensional feature, and is subjective and unreliable.

Therefore, in this embodiment of this application, a more reliable feature selection and sorting mechanism can be established by combining advantages of a filter feature selection algorithm and an embedded feature selection algorithm, so that the second feature parameter selected through feature selection and an importance measurement result corresponding to the second feature parameter are more objective and accurate, and a subsequently determined driving style model has higher precision. With reference to the following descriptions, the second feature parameter among the plurality of feature parameters and the evaluation value corresponding to the second feature parameter may be determined according to a filter feature selection method and an embedded feature selection method.

The filter feature selection method may be a ReliefF algorithm or any other filter feature selection algorithm. The embedded feature selection method may be an elastic net algorithm or any other embedded feature selection algorithm.

The following further describes a process of determining, according to the filter feature selection method and the embedded feature selection method, the second feature parameter among the plurality of feature parameters and the evaluation value corresponding to the second feature parameter.

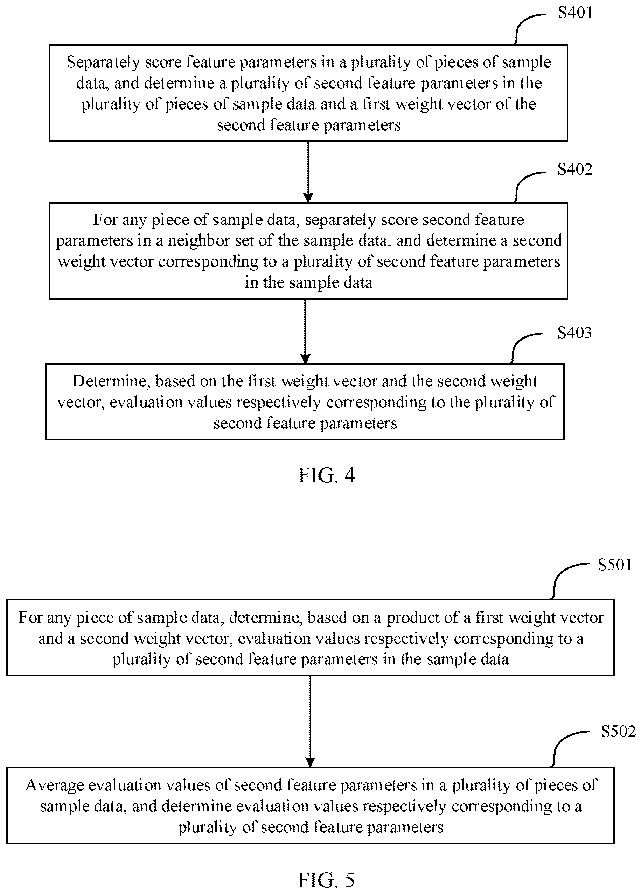

FIG. 4 is a flowchart of a driving style recognition method according to an embodiment of this application. As shown in FIG. 4, optionally, step S302 may include the following steps.

Step S401: Separately score feature parameters in a plurality of pieces of sample data, and determine a plurality of second feature parameters in the plurality of pieces of sample data and a first weight vector of the second feature parameters.

The plurality of pieces of sample data may be all of sample data in a sample dataset. The first weight vector may correspond to the plurality of pieces of sample data, and may include a plurality of weights. Each weight may correspond to one second feature parameter, and indicates a calculated degree of importance of the second feature parameter.

The first weight vector may be determined according to the filter feature selection method. The feature parameters in the plurality of pieces of sample data may be separately scored by using the filter feature selection algorithm. For example, the plurality of second feature parameters in the plurality of pieces of sample data and the first weight vector of the second feature parameters may be determined by using the ReliefF algorithm (or any other filter feature selection algorithm). For example, when each of the plurality of pieces of sample data includes an R-dimensional feature parameter, an N-dimensional feature parameter with a higher score may be determined, by using the filter feature selection algorithm, as a second feature parameter corresponding to each piece of sample data, where N≤R, and a value of N may be determined based on computing power.

For an example of the first weight vector determined according to step S401, refer to a formula (1):

$$\vec{W} = [W(P_1), W(P_2), \dots, W(P_N)] \qquad \text{Formula (1)}$$

W may indicate the first weight vector corresponding to the plurality of pieces of sample data. $P_1$, $P_2$, and $P_N$ may respectively indicate different second feature parameters. $W(P_1)$, $W(P_2)$, and $W(P_N)$ may respectively indicate weights of $P_1$, $P_2$, and $P_N$ in the first weight vector. The weight may be understood as an evaluation value obtained by scoring a corresponding second feature parameter by using the ReliefF algorithm. A larger weight value may indicate higher importance of the corresponding second feature parameter.

Step S402: For any piece of sample data, separately score second feature parameters in a neighbor set of the sample data, and determine a second weight vector corresponding to a plurality of second feature parameters in the sample data.

One second weight vector may correspond to one piece of sample data. The second weight vector may include a plurality of weights. Each weight may correspond to one second feature parameter, and indicates a calculated degree of importance of the second feature parameter.

After the neighbor set of the sample data is determined by using the embedded feature selection algorithm, the second feature parameters may be separately scored in the neighbor set of the sample data.

The neighbor set of the sample data may be determined based on a distance between the sample data and other sample data. Optionally, the neighbor set of the sample data may be determined based on a Manhattan distance between the sample data and the other sample data. The Manhattan distance between the sample data and the other sample data may be determined by calculating a Manhattan distance matrix. For an example of the Manhattan distance matrix, refer to a formula (2):

$$D = \begin{bmatrix} d_{11} & d_{12} & \cdots & d_{1m} \\ d_{21} & d_{22} & \cdots & d_{2m} \\ \vdots & \vdots & \ddots & \vdots \\ d_{m1} & d_{m2} & \cdots & d_{mm} \end{bmatrix} \qquad \text{Formula (2)}$$

D may indicate the Manhattan distance matrix of the sample data. m may indicate a total quantity of pieces of sample data X. $d_{ij}$ may indicate a Manhattan distance between an $i^{th}$ piece of sample data and a $j^{th}$ piece of sample data. For a calculation manner of $d_{ij}$, refer to a formula (3):

$$d_{ij} = \sum_{q=1}^{N} |P_{i,q} - P_{j,q}| \qquad \text{Formula (3)}$$

N may indicate a total quantity of second feature parameters. $P_{i,q}$ may indicate a value of a $q^{th}$ second feature parameter in the $i^{th}$ piece of sample data. $P_{j,q}$ may indicate a value of a $q^{th}$ second feature parameter in the $j^{th}$ piece of sample data.

According to this embodiment of this application, the neighbor set of the sample data can be more objectively determined by using the Manhattan distance between sample data, so that evaluation values of the second feature parameters can be more accurately determined.

Optionally, the neighbor set of the sample data may include the sample data, a homogeneous neighbor set of the sample data, and a heterogeneous neighbor set of the sample data.

The neighbor set of the sample data may be determined based on the Manhattan distance between sample data by using a k-means clustering algorithm (k-means clustering algorithm) or another clustering algorithm. The homogeneous neighbor set of the sample data may represent a dataset including t homogeneous samples that are closest to the sample data based on the Manhattan distance. The heterogeneous neighbor set of the sample data may represent a dataset including t heterogeneous samples that are closest to the sample data based on the Manhattan distance. A value of t may be determined according to a requirement. For a manner of determining a neighbor set of sample data $X_i$, refer to a formula (4):

$$N(X_i) = NM(X_i) \cup NH(X_i) \cup \{X_i\} \qquad \text{Formula (4)}$$

$N(X_i)$ may indicate the neighbor set of the sample data $X_i$, $NM(X_i)$ may indicate a heterogeneous neighbor set of the sample data $X_i$, and $NH(X_i)$ may indicate a homogeneous neighbor set of the sample data $X_i$.

In this way, a neighbor range of the sample data can be more comprehensively considered, to accurately determine the evaluation values of the second feature parameters in the neighbor set of the sample data.

After the neighbor set is determined, for the sample data $X_i$, second feature parameters may be separately scored in the neighbor set $N(X_i)$, and second weight vector corresponding to a plurality of second feature parameters in the sample data $X_i$ is determined. To be specific, one piece of sample data $X_i$ corresponds to one neighbor set $N(X_i)$, and one second weight vector of the sample data $X_i$ may be determined based on the neighbor set $N(X_i)$.

The second weight vector may be determined according to the embedded feature selection method. A second weight vector corresponding to a plurality of second feature parameters may be determined by using the embedded feature selection algorithm (for example, the elastic net algorithm). For an example of the second weight vector, refer to a formula (5):

$$\overrightarrow{W_{X_i}} = [W_{X_i}(P_1), W_{X_i}(P_2), \dots, W_{X_i}(P_N)] \qquad \text{Formula (5)}$$

$\overrightarrow{W_{X_i}}$ may indicate a second weight vector determined in the neighbor set of the sample data $X_i$. $P_1$, $P_2$, and $P_N$ may respectively indicate different second feature parameters. $W_{X_i}(P_1)$, $W_{X_i}(P_2)$, and $W_{X_i}(P_N)$ may respectively indicate weights of $P_1$, $P_2$, and $P_N$ in the second weight vector. The weight may be understood as an evaluation value obtained by scoring a corresponding second feature parameter by using the elastic net algorithm. A larger weight value may indicate higher importance of the corresponding second feature parameter.

Step S403: Determine, based on the first weight vector and the second weight vector, evaluation values respectively corresponding to the plurality of second feature parameters.

The evaluation values respectively corresponding to the plurality of second feature parameters may be obtained through fusion of the first weight vector and the second weight vector. One evaluation value may be determined for each second feature parameter. The evaluation value may indicate a finally determined degree of importance of the second feature parameter. The following describes a process of step S403 in detail.

According to this embodiment of this application, the feature parameters in the sample data are separately scored by using a fusion feature selection method, to obtain the first weight vector, and the second feature parameters in the neighbor set of the sample data are separately scored to obtain the second weight vector, so that advantages of both the filter feature selection algorithm and the embedded feature selection algorithm can be leveraged, and good selectivity is achieved for both a single feature and a feature combination. The evaluation values of the second feature parameters are determined based on the first weight vector and the second weight vector, so that the obtained evaluation values are more reliable, and a more accurate driving style model can be subsequently established based on this.

FIG. 5 is a flowchart of a driving style recognition method according to an embodiment of this application. As shown in FIG. 5, optionally, step S403 may include the following steps.

Step S501: For any piece of sample data, determine, based on a product of the first weight vector and the second weight vector, evaluation values respectively corresponding to a plurality of second feature parameters in the sample data.

In this way, a comprehensive score of the second feature parameter may be determined by combining the first weight vector and the second weight vector. For a manner of calculating the comprehensive score for the sample data $X_i$, refer to a formula (6):

$$\overrightarrow{W_{X_i}}^{\circ} = \overrightarrow{W} \cdot \overrightarrow{W_{X_i}} = [W_{X_i}^{\circ}(P_1), W_{X_i}^{\circ}(P_2), \dots, W_{X_i}^{\circ}(P_N)] \qquad \text{Formula (6)}$$

$\overrightarrow{W_{X_i}}^{\circ}$ may indicate a comprehensive score determined for the sample data $X_i$ by combining the first weight vector and the second weight vector. W may indicate the first weight vector. $\overrightarrow{W_{X_i}}$ may indicate the second weight vector of the sample data $X_i$. $W_{X_i}^{\circ}(P_1)$, $W_{X_i}^{\circ}(P_2)$, and $W_{X_i}^{\circ}(P_N)$ may respectively indicate evaluation values of $P_1$, $P_2$, and $P_N$ in the comprehensive score corresponding to the sample data $X_i$.

Step S502: Average evaluation values of the second feature parameters in the plurality of pieces of sample data, and determine the evaluation values respectively corresponding to the plurality of second feature parameters.

Step S402 and step S501 may be iteratively performed for m pieces of sample data, until evaluation values respectively corresponding to a plurality of second feature parameters are calculated in each of the m pieces of sample data. In this way, the evaluation values of the second feature parameters in the plurality of pieces of sample data can be averaged, to determine the evaluation values respectively corresponding to the plurality of second feature parameters.

For each second feature parameter, a corresponding evaluation value may be calculated in step S502. For a manner of calculating the evaluation values respectively corresponding to the plurality of second feature parameters, refer to a formula (7):

$$\overrightarrow{W_{RFEN}} = \left[\frac{1}{m}\sum_{i=1}^{m} W_{X_i}^{\,\circ}(P_1), \frac{1}{m}\sum_{i=1}^{m} W_{X_i}^{\,\circ}(P_2), \dots, \frac{1}{m}\sum_{i=1}^{m} W_{X_i}^{\,\circ}(P_N)\right]$$

Formula (7)

$$= [W_{RFEN}(P_1), W_{RFEN}(P_2), \dots, W_{RFEN}(P_N)]$$

$\overrightarrow{W_{RFEN}}$ may indicate an evaluation vector respectively corresponding to the plurality of second feature parameters. $P_1$, $P_2$, and $P_N$ may respectively indicate different second feature parameters. m may indicate a total quantity of pieces of sample data. $W_{X_i}^{\,\circ}(P_1)$, $W_{X_i}^{\,\circ}(P_2)$, and $W_{X_i}^{\,\circ}(P_N)$ may respectively indicate evaluation values, corresponding to the sample data $X_i$, of $P_1$, $P_2$, and $P_N$. $W_{RFEN}(P_1)$, $W_{RFEN}(P_2)$, and $W_{RFEN}(P_N)$ may respectively indicate evaluation values, corresponding to all sample data, of $P_1$, $P_2$, and $P_N$.

According to this embodiment of this application, the product of the first weight vector and the second weight vector is calculated, so that the evaluation values of the second feature parameters can be determined by combining the advantages of the filter feature selection algorithm and the embedded feature selection algorithm. The evaluation values of the plurality of pieces of sample data are determined through traversal, and an average value is obtained as a final evaluation value, so that the finally determined evaluation value can be more accurate and reliable.

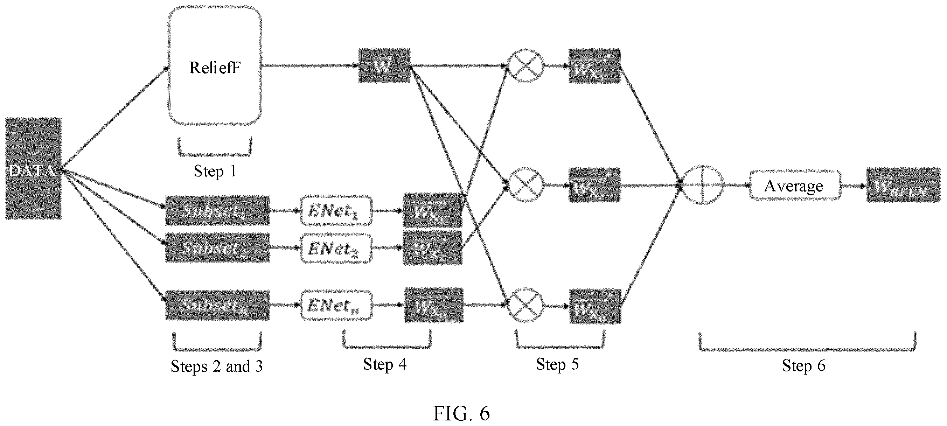

FIG. 6 is a diagram of an architecture of a feature selection method according to an embodiment of this application. As shown in FIG. 6, DATA may indicate input sample data.

In step 1, a first weight vector (W shown in the figure) may be calculated by using the ReliefF algorithm in the manner shown in step S401. In steps 2 and 3, neighbor sets (Subset$_1$, Subset$_2$, and Subset$_n$ in the figure) of the sample data may be determined in the manner shown in step S402. In step 4, second weight vectors ($\overrightarrow{W_{X_1}}$, $\overrightarrow{W_{X_2}}$, and $\overrightarrow{W_{X_n}}$ shown in the figure) of sample data in the neighbor sets may be calculated by using the elastic net algorithm (ENet$_1$, ENet$_2$, and ENet$_n$ shown in the figure) in the manner shown in step S402. In step 5, evaluation values ($\overrightarrow{W_{X_1}}^{\,\circ}$, $\overrightarrow{W_{X_2}}^{\,\circ}$, and $\overrightarrow{W_{X_n}}^{\,\circ}$ shown in the figure) respectively corresponding to a plurality of second feature parameters in the sample data may be calculated in the manner shown in step S501. In step 6, in the manner shown in step S502, the evaluation values of the sample data may be averaged (Average), and evaluation values ($\overrightarrow{W_{RFEN}}$ shown in the figure) respectively corresponding to the plurality of second feature parameters are calculated.

In this way, a plurality of second feature parameters correlated with driving style recognition, and quantitative scores of correlations of the parameters, namely, evaluation values of the second feature parameters, can be determined.

However, driving styles of a driver in different electronic control functions may not be uniform, and parameters that affect driving style recognition results for different electronic control functions may be inconsistent. Therefore, in the training stage in this embodiment of this application, after the plurality of second feature parameters are determined, driving style models matching different electronic control functions are independently formulated for the electronic control functions according to requirements and characteristics of the electronic control functions. In this way, different driving style models can be generated for different electronic control functions, and driving style models matching different electronic control functions can be subsequently found in response to requirements of the electronic control functions, to recognize a driving style, so that the recognized driving style can be more practical. For a process of independently formulating driving style models for different electronic control functions, refer to the following descriptions.

Step S303: For any target electronic control function, determine, from the second feature parameter, a first feature parameter associated with the target electronic control function.

One or more feature parameters may be selected, according to a requirement and a characteristic of the target electronic control function, from the plurality of second feature parameters as a first feature parameter or first feature parameters associated with the target electronic control function. This process may be implemented manually or by using a related algorithm. This is not limited in this application.

The second feature parameters may be sorted in descending order of evaluation values, to intuitively identify a parameter of great significance to driving style recognition, and one or more feature parameters are selected from the second feature parameters in descending order of evaluation values as a first feature parameter or first feature parameters associated with the target electronic control function.

For example, when the target electronic control function is an electric power steering function, the determined first feature parameter associated with the target electronic control function may include a vehicle speed, a steering wheel turning angle, a lateral acceleration, a steering wheel turning speed, a longitudinal acceleration, and the like. When the target electronic control function is a brake pedal feel function, the determined first feature parameter associated with the target electronic control function may include a vehicle speed, a brake pedal displacement, a lateral acceleration, a brake pedal speed, a longitudinal acceleration, an electric cylinder pressure buildup rate, and the like. When the target electronic control function is an accelerator pedal feel function, the determined first feature parameter associated with the target electronic control function may include a vehicle speed, an accelerator pedal displacement, an accelerator pedal speed, a longitudinal acceleration, a longitudinal acceleration change rate, a steering wheel turning angle, a steering wheel turning speed, and the like.

Step S304: Obtain, through training based on the first feature parameter associated with the target electronic control function and an evaluation value of the first feature parameter, a target driving style model associated with the target electronic control function.

For each electronic control function, a corresponding driving style model may be obtained through training according to step S303 and step S304, so that a driving style model can be independently formulated for each function.

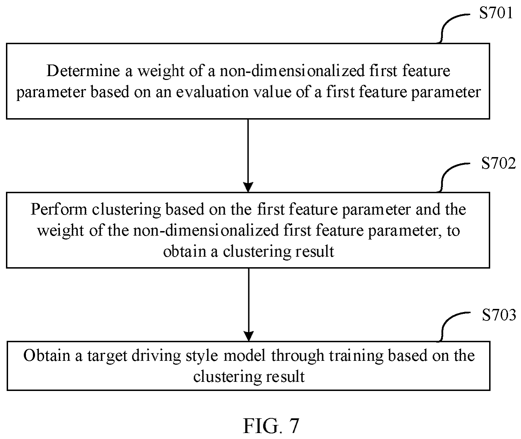

A manner of obtaining the target driving style model through training based on the first feature parameter and the evaluation value is not limited in this application. The following describes one of implementations with reference to FIG. 7.

According to this embodiment of this application, the sample data is obtained; the plurality of second feature parameters and the evaluation values of the plurality of second feature parameters are determined according to the feature selection method; for any target electronic control function, a first feature parameter associated with the target electronic control function is determined from the second feature parameters, so that a subsequent training process is more targeted; and a target driving style model associated with the target electronic control function is obtained through training based on the first feature parameter and an evaluation value of the first feature parameter, so that the model obtained through training can better adapt to the target electronic control function, and can more truly and accurately indicate a driving style of a driver in the function, and subsequent driving style recognition has higher flexibility, a wider coverage, and higher personalization.

FIG. 7 is a flowchart of a driving style recognition method according to an embodiment of this application. As shown in FIG. 7, optionally, step S304 may include the following steps.

Step S701: Determine a weight of a non-dimensionalized first feature parameter based on the evaluation value of the first feature parameter.

Because different first feature parameters are measured in different units, the first feature parameter may be non-dimensionalized. A non-dimensionalization manner is not limited.

For example, the evaluation value of the first feature parameter may be normalized to obtain a weight within a value range of [0, 1]. A larger evaluation value may indicate a larger determined weight.

Step S702: Perform clustering based on the first feature parameter and the weight of the non-dimensionalized first feature parameter, to obtain a clustering result.

For example, a corresponding weighted high-dimensional coordinate system may be formulated based on the first feature parameter and the weight of the non-dimensionalized first feature parameter. A longer coordinate axis of the first feature parameter in the coordinate system may indicate a smaller weight of the first feature parameter. In this way, based on the weighted coordinate system, a data point close to a shorter coordinate axis has a shorter distance in high-dimensional space, and is more important during clustering analysis. Based on this, clustering analysis may be performed by using training data, to generate different driving style categories as a clustering result. A clustering manner is not limited in this application, and may be implemented based on the conventional technology.

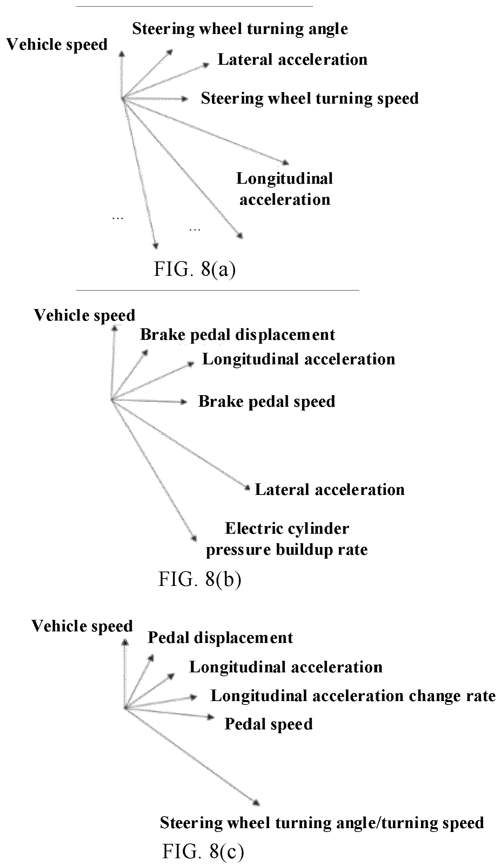

FIG. 8(a), FIG. 8(b), and FIG. 8(c) are diagrams of weighted coordinate systems according to an embodiment of this application. FIG. 8(a) shows a weighted coordinate system generated for the electric power steering function. As shown in the figure, a vehicle speed, a steering wheel turning angle, a lateral acceleration, a steering wheel turning speed, and a longitudinal acceleration may respectively represent first feature parameters associated with the electric power steering function. A longer coordinate axis may indicate a smaller weight of a first feature parameter corresponding to the coordinate axis.

FIG. 8(b) shows a weighted coordinate system generated for the brake pedal feel function. As shown in the figure, a vehicle speed, a brake pedal displacement, a lateral acceleration, a brake pedal speed, a longitudinal acceleration, and an electric cylinder pressure buildup rate may respectively represent first feature parameters associated with the brake pedal feel function. A longer coordinate axis may indicate a smaller weight of a first feature parameter corresponding to the coordinate axis.

FIG. 8(c) shows a weighted coordinate system generated for the accelerator pedal feel function. As shown in the figure, a vehicle speed, a pedal displacement, a pedal speed, a longitudinal acceleration, a longitudinal acceleration change rate, and a steering wheel turning angle/turning speed may respectively represent first feature parameters associated with the accelerator pedal feel function. A longer coordinate axis may indicate a smaller weight of a first feature parameter corresponding to the coordinate axis.

Step S703: Obtain the target driving style model through training based on the clustering result.

Training data with a driving style label may be generated based on labels, indicated by the clustering result, for different types of driving styles. The training data may further include pre-obtained driving training data that indicates the driving status of the vehicle. The driving training data may match the target electronic control function, for example, include a parameter value of the first feature parameter associated with the target electronic control function. Therefore, a loss function may be constructed based on the training data with the label and an output of the target driving style model, and an initial target driving style model is trained by using any machine learning algorithm to obtain the target driving style model.

According to this embodiment of this application, clustering is performed based on the first feature parameter and the weight of the non-dimensionalized first feature parameter, to obtain the clustering result, and the target driving style model is obtained through training based on the clustering result. A unit dimension difference between weights of first feature parameters can be considered, so that the clustering result is more accurate. In this way, driving style models matching different electronic control functions of the vehicle can be independently determined for the electronic control functions, so that driving styles can be subsequently recognized for different functions by using different models, to improve precision of a recognition result.

For each electronic control function of the vehicle, a driving style model matching the electronic control function may be generated by traversing the manners in step S303 and step S304. In this way, the generated model can be deployed on the vehicle, and a driving style of a driver can be subsequently recognized in the manner shown in step S201 and step S202, to determine a control policy for a corresponding function.

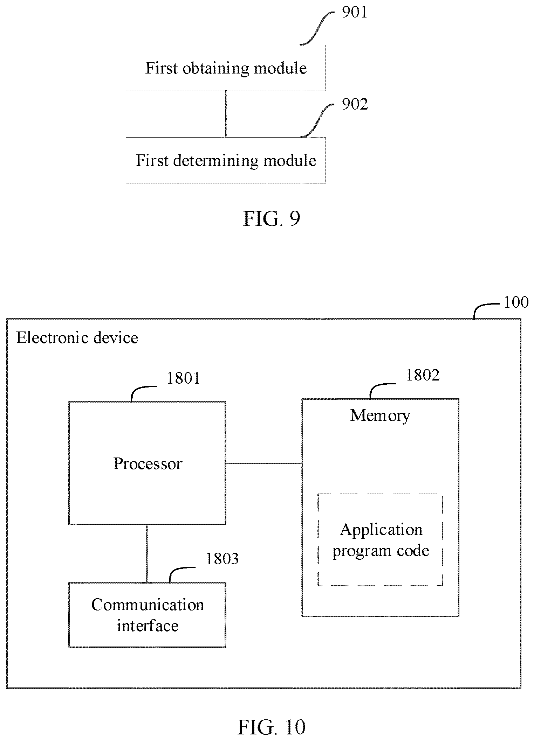

FIG. 9 is a diagram of a structure of a driving style recognition apparatus according to an embodiment of this application. The apparatus may be used in a vehicle. As shown in FIG. 9, the apparatus may include:

a first obtaining module 901, configured to obtain driving data in response to a requirement of a target electronic control function of the vehicle, where the driving data indicates a driving status of the vehicle; and
a first determining module 902, configured to input the driving data to a target driving style model, to determine a driving style matching the target electronic control function, where the target driving style model is a driving style model matching the target electronic control function among a plurality of driving style models, and the driving style matching the target electronic control function is used for determining a control policy for the target electronic control function.

According to this embodiment of this application, in response to the requirement of the target electronic control function of the vehicle, the obtained driving data is input to the target driving style model matching the target electronic control function, so that driving style models can be correspondingly provided for different functions according to requirements and characteristics of the functions. This is more flexible. In this way, the driving style matching the target electronic control function can be determined, so that the recognized driving style is more accurate and reliable and better adapts to the requirement of the target electronic control function. In addition, a control policy can be determined for the electronic control function in a more targeted manner, so that personalization during driving is improved.

Optionally, the target electronic control function is any one of chassis electronic control functions of the vehicle, or the target electronic control function is any one of driver assistance functions of the vehicle.

According to this embodiment of this application, a driving style of a driver in a corresponding function can be determined according to requirements and characteristics of different electronic control functions of the vehicle, so that different control policies are more accurately and flexibly used for different functions, to improve personalization of the vehicle.

Optionally, the feature parameter includes one or more of the following: a parameter of a brake operation, a parameter of a steering wheel operation, a parameter of an acceleration/deceleration operation, and a vehicle traveling parameter.

According to this embodiment of this application, impact of different types of driving data on a driving style can be more comprehensively considered, so that a recognized driving style can be more accurate.

Optionally, the target driving style model is obtained through training based on a first feature parameter associated with the target electronic control function and an evaluation value of the first feature parameter, and the evaluation value indicates a degree of importance of the feature parameter during determining of the driving style.

According to this embodiment of this application, the target driving style model is obtained through training based on the first feature parameter associated with the target electronic control function and the evaluation value of the first feature parameter, so that the model obtained through training can better adapt to the target electronic control function, and can more truly and accurately indicate a driving style of a driver in the function. In this way, a corresponding control policy can be more accurately formulated, to improve driving experience.

Optionally, the apparatus may further include:

a second obtaining module, configured to obtain sample data, where the sample data includes a plurality of feature parameters indicating a driving status of the vehicle;

a second determining module, configured to determine, according to a feature selection method, a second feature parameter among the plurality of feature parameters and an evaluation value corresponding to the second feature parameter;

a third determining module, configured to: for any target electronic control function, determine, from the second feature parameter, a first feature parameter associated with the target electronic control function; and

a training module, configured to obtain, through training based on the first feature parameter associated with the target electronic control function and an evaluation value of the first feature parameter, the target driving style model associated with the target electronic control function.

According to this embodiment of this application, the sample data is obtained; a plurality of second feature parameters and evaluation values of the plurality of second feature parameters are determined according to the feature selection method; for any target electronic control function, a first feature parameter associated with the target electronic control function is determined from the second feature parameters, so that a subsequent training process is more targeted; and a target driving style model associated with the target electronic control function is obtained through training based on the first feature parameter and an evaluation value of the first feature parameter, so that the model obtained through training can better adapt to the target electronic control function, and can more truly and accurately indicate a driving style of a driver in the function, and subsequent driving style recognition has higher flexibility, a wider coverage, and higher personalization.

Optionally, the second determining module is configured to:

separately score feature parameters in a plurality of pieces of sample data, and determine a plurality of second feature parameters in the plurality of pieces of sample data and a first weight vector of the second feature parameters;

for any piece of sample data, separately score second feature parameters in a neighbor set of the sample data, and determine a second weight vector corresponding to a plurality of second feature parameters in the sample data; and

determine, based on the first weight vector and the second weight vector, evaluation values respectively corresponding to the plurality of second feature parameters.

According to this embodiment of this application, the feature parameters in the sample data are separately scored by using a fusion feature selection method, to obtain the first weight vector, and the second feature parameters in the neighbor set of the sample data are separately scored to obtain the second weight vector, so that good selectivity can be achieved for both a single feature and a feature combination. The evaluation values of the second feature parameters are determined based on the first weight vector and the second weight vector, so that the obtained evaluation values are more reliable, and a more accurate driving style model can be subsequently established based on this.

Optionally, the first weight vector is determined according to a filter feature selection method, and the second weight vector is determined according to an embedded feature selection method.

According to this embodiment of this application, a more reliable feature selection and sorting mechanism can be established by combining advantages of the filter feature selection method and the embedded feature selection method, so that the second feature parameter selected through feature selection and an importance measurement result corresponding to the second feature parameter are more objective and accurate, and a subsequently determined driving style model has higher precision.

Optionally, the neighbor set of the sample data is determined based on a Manhattan distance between the sample data and other sample data.

According to this embodiment of this application, the neighbor set of the sample data can be more objectively determined by using the Manhattan distance between sample data, so that evaluation values of the second feature parameters can be more accurately determined.

Optionally, the neighbor set of the sample data includes the sample data, a homogeneous neighbor set of the sample data, and a heterogeneous neighbor set of the sample data.

According to this embodiment of this application, a neighbor range of the sample data can be more comprehensively considered, to accurately determine the evaluation values of the second feature parameters in the neighbor set of the sample data.

Optionally, the determining, based on the first weight vector and the second weight vector, evaluation values respectively corresponding to the plurality of second feature parameters includes:

for any piece of sample data, determining, based on a product of the first weight vector and the second weight vector, evaluation values respectively corresponding to a plurality of second feature parameters in the sample data; and

averaging evaluation values of the second feature parameters in the plurality of pieces of sample data, and determining the evaluation values respectively corresponding to the plurality of second feature parameters.

According to this embodiment of this application, the product of the first weight vector and the second weight vector is calculated, so that the evaluation values of the second feature parameters can be determined by combining advantages of a filter feature selection algorithm and an embedded feature selection algorithm. The evaluation values of the plurality of pieces of sample data are determined through traversal, and an average value is obtained as a final evaluation value, so that the finally determined evaluation value can be more accurate and reliable.

Optionally, the training module is configured to:

determine a weight of a non-dimensionalized first feature parameter based on the evaluation value of the first feature parameter;

perform clustering based on the first feature parameter and the weight of the non-dimensionalized first feature parameter, to obtain a clustering result; and

obtain the target driving style model through training based on the clustering result.

According to this embodiment of this application, clustering is performed based on the first feature parameter and the weight of the non-dimensionalized first feature parameter, to obtain the clustering result, and the target driving style model is obtained through training based on the clustering result. A unit dimension difference between weights of first feature parameters can be considered, so that the clustering result is more accurate. In this way, driving style models matching different electronic control functions of the vehicle can be independently determined for the electronic control functions, so that driving styles can be subsequently recognized for different functions by using different models, to improve precision of a recognition result.

An embodiment of this application provides a driving style recognition apparatus, including a processor and a memory for storing processor-executable instructions. The processor is configured to implement the foregoing driving style recognition method when executing the instructions.

An embodiment of this application provides a terminal device. The terminal device may perform the foregoing driving style recognition method.

An embodiment of this application provides a nonvolatile computer-readable storage medium. The nonvolatile computer-readable storage medium stores computer program instructions. When the computer program instructions are executed by a processor, the foregoing driving style recognition method is implemented.

An embodiment of this application provides a computer program product, including computer-readable code or a nonvolatile computer-readable storage medium carrying computer-readable code. When the computer-readable code is run in a processor of an electronic device, the processor in the electronic device performs the foregoing driving style recognition method.

FIG. 10 is a diagram of a structure of an electronic device 100 according to an embodiment of this application. As shown in FIG. 10, the electronic device 100 may be the foregoing vehicle or the foregoing cloud server, and is configured to perform a function in the driving style recognition method shown in any one of FIG. 2 to FIG. 8(c). The electronic device 100 includes at least one processor 1801, at least one memory 1802, and at least one communication interface 1803. In addition, the electronic device may further include a general-purpose component such as an antenna. Details are not described herein.

The following describes the components of the electronic device 100 in detail with reference to FIG. 10.

The processor 1801 may be a general-purpose central processing unit (CPU), a microprocessor, an application-specific integrated circuit (application-specific integrated circuit, ASIC), or one or more integrated circuits for controlling execution of programs for the foregoing solutions. The processor 1801 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The communication interface 1803 is configured to communicate with another electronic device or a communication network, for example, Ethernet, a radio access network (RAN), a core network, or a wireless local area network (Wireless Local Area Network, WLAN). For example, when the electronic device 100 is a vehicle, the communication interface 1803 may be configured to communicate with a cloud server. For another example, when the electronic device 100 is a cloud server, the communication interface 1803 may be configured to communicate with a vehicle.

The memory 1802 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (Electrically Erasable Programmable Read-Only Memory, EEPROM), a compact disc read-only memory (Compact Disc Read-Only Memory, CD-ROM) or another optical disk storage, an optical disc storage (including a compact disc, a laser disc, an optical disc, a digital versatile disc, a Blu-ray disc, or the like), a magnetic disk storage medium or another magnetic storage device, or any other medium that can carry or store expected program code in a form of an instruction or a data structure and that can be accessed by a computer, but is not limited thereto. The memory may exist independently, and is connected to the processor through a bus. The memory may alternatively be integrated with the processor.

The memory 1802 is configured to store application program code for performing the foregoing solutions, and the processor 1801 controls execution of the application program code. The processor 1801 is configured to execute the application program code stored in the memory 1802.

In the foregoing embodiments, the descriptions in the embodiments have respective focuses. For a part that is not described in detail in an embodiment, refer to related descriptions in other embodiments.

The computer-readable storage medium may be a tangible device capable of retaining and storing instructions to be used by an instruction execution device. For example, the computer-readable storage medium may be but is not limited to an electronic storage device, a magnetic storage device, an optical storage device, an electromagnetic storage device, a semiconductor storage device, or any suitable combination thereof. More specific examples (a non-exhaustive list) of the computer-readable storage medium include a portable computer disk, a hard disk drive, a random access memory (Random Access Memory, RAM), a read-only memory (Read-Only Memory, ROM), an erasable programmable read-only memory (Electrically Programmable Read-Only Memory, EPROM, or a flash memory), a static random access memory (Static Random Access Memory, SRAM), a portable compact disc read-only memory (Compact Disc Read-Only Memory, CD-ROM), a digital video disc (Digital Video Disc, DVD), a memory stick, a floppy disk, a mechanical coding device, for example, a punched card or a groove protrusion structure that stores instructions, and any suitable combination thereof.

The computer-readable program instructions or code described herein may be downloaded from the computer-readable storage medium to each computing/processing device or to an external computer or an external storage device through a network such as the Internet, a local area network, a wide area network, and/or a wireless network. The network may include a copper transmission cable, fiber-optic transmission, wireless transmission, a router, a firewall, a switch, a gateway computer, and/or an edge server. A network adapter card or a network interface in each computing/processing device receives the computer-readable program instructions from the network, and forwards the computer-readable program instructions for storage in a computer-readable storage medium in the computing/processing device.

The computer program instructions for performing operations in this application may be assembly instructions, instruction set architecture (Instruction Set Architecture, ISA) instructions, machine instructions, machine-related instructions, microcode, firmware instructions, status setting data, or source code or object code written in one programming language or any combination of a plurality of programming languages. The programming languages include an object-oriented programming language such as Smalltalk or C++, and a conventional procedural programming language such as a "C" language or a similar programming language. The computer-readable program instructions may be fully executed on a user computer, partially executed on a user computer, executed as a separate software package, partially executed on a user computer and partially executed on a remote computer, or fully executed on a remote computer or server. When a remote computer is used, the remote computer may be connected to a user computer through any type of network, including a local area network (Local Area Network, LAN) or a wide area network (Wide Area Network, WAN), or may be connected to an external computer (for example, connected through the Internet via an Internet service provider). In some embodiments, an electronic circuit, for example, a programmable logic circuit, a field programmable gate array (Field Programmable Gate Array, FPGA), or a programmable logic array (Programmable Logic Array, PLA), is customized by using status information of the computer-readable program instructions. The electronic circuit may execute the computer-readable program instructions to implement various aspects of this application.

Various aspects of this application are described herein with reference to the flowcharts and/or block diagrams of the method, the apparatus (system), and the computer program product according to embodiments of this application. It should be understood that each block of the flowcharts and/or block diagrams and a combination of blocks in the flowcharts and/or block diagrams may be implemented by the computer-readable program instructions.

The computer-readable program instructions may be provided for a processor of a general-purpose computer, a dedicated computer, or another programmable data processing apparatus to produce a machine. Therefore, when the instructions are executed by the processor of the computer or the another programmable data processing apparatus, an apparatus for implementing functions/actions specified in one or more blocks in the flowcharts and/or block diagrams is produced. The computer-readable program instructions may alternatively be stored in the computer-readable storage medium. The instructions enable a computer, a programmable data processing apparatus, and/or another device to operate in a specific manner. Therefore, the computer-readable medium storing the instructions includes an artifact that includes instructions for implementing various aspects of functions/actions specified in one or more blocks in the flowcharts and/or block diagrams.

The computer-readable program instructions may alternatively be loaded to a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device implement functions/actions specified in one or more blocks in the flowcharts and/or block diagrams.

The flowcharts and block diagrams in the accompanying drawings show possible implementations of system architectures, functions, and operations of apparatuses, systems, methods, and computer program products according to a plurality of embodiments of this application. In this regard, each block in the flowcharts or block diagrams may represent a module, a program segment, or a part of the instructions, and the module, the program segment, or the part of the instructions includes one or more executable instructions for implementing a specified logical function. In some alternative implementations, functions marked in blocks may alternatively be performed in a sequence different from that marked in the accompanying drawings. For example, two consecutive blocks may actually be performed substantially in parallel, or may sometimes be performed in a reverse order. This depends on a function to be implemented.

It should also be noted that each block in the block diagrams and/or flowcharts, and a combination of blocks in the block diagrams and/or flowcharts may be implemented by hardware (for example, a circuit or an ASIC (Application-Specific Integrated Circuit, application-specific integrated circuit)) that performs a corresponding function or action, or may be implemented by a combination of hardware and software, for example, firmware.

Although the present invention is described with reference to embodiments, during implementation of the present invention that claims protection, a person skilled in the art may understand and implement another variation of the disclosed embodiments by viewing the accompanying drawings, disclosed content, and appended claims. In the claims, "comprising" (comprising) does not exclude another component or step, and "a" or "an" does not exclude a case of more than one. A single processor or another unit may implement several functions enumerated in the claims. Some measures are recorded in dependent claims that are different from each other, but this does not mean that these measures cannot be combined to produce better effect.

Embodiments of this application are described above. The foregoing descriptions are examples but not exhaustive, and are not limited to the disclosed embodiments. Many modifications and variations are clear to a person of ordinary skill in the art without departing from the scope of the described embodiments. Selection of terms used in this specification is intended to best describe principles and actual application of embodiments or improvements made to technologies on the market, or to enable a person of ordinary skill in the art to understand embodiments disclosed in this specification.

## Claims

1. A driving style recognition method, wherein the method comprises:

   obtaining driving data in response to a requirement of a target electronic control function of a vehicle, wherein the driving data indicates a driving status of the vehicle; and
   inputting the driving data to a target driving style model, to determine a driving style matching the target electronic control function, wherein the target driving style model is a driving style model matching the target electronic control function among a plurality of driving style models, and the driving style matching the target electronic control function is used for determining a control policy for the target electronic control function.

2. The method according to claim 1, wherein the target driving style model is obtained through training based on a first feature parameter associated with the target electronic control function and an evaluation value of the first feature parameter, and the evaluation value indicates a degree of importance of the feature parameter during determining of the driving style.

3. The method according to claim 2, wherein the method further comprises:

   obtaining sample data, wherein the sample data comprises a plurality of feature parameters indicating a driving status of the vehicle;
   determining, according to a feature selection method, a second feature parameter among the plurality of feature parameters and an evaluation value corresponding to the second feature parameter;
   for any target electronic control function, determining, from the second feature parameter, a first feature parameter associated with the target electronic control function; and
   obtaining, through training based on the first feature parameter associated with the target electronic control function and an evaluation value of the first feature parameter, the target driving style model associated with the target electronic control function.

4. The method according to claim 3, wherein the obtaining, through training based on the first feature parameter associated with the target electronic control function and an evaluation value of the first feature parameter, the target driving style model associated with the target electronic control function comprises:

> determining a weight of a non-dimensionalized first feature parameter based on the evaluation value of the first feature parameter;
> performing clustering based on the first feature parameter and the weight of the non-dimensionalized first feature parameter, to obtain a clustering result; and
> obtaining the target driving style model through training based on the clustering result.

5. The method according to claim 3 or 4, wherein the determining, according to a feature selection method, a second feature parameter among the plurality of feature parameters and an evaluation value corresponding to the second feature parameter comprises:

> separately scoring feature parameters in a plurality of pieces of sample data, and determining a plurality of second feature parameters in the plurality of pieces of sample data and a first weight vector of the second feature parameters;
> for any piece of sample data, separately scoring second feature parameters in a neighbor set of the sample data, and determining a second weight vector corresponding to a plurality of second feature parameters in the sample data; and
> determining, based on the first weight vector and the second weight vector, evaluation values respectively corresponding to the plurality of second feature parameters.

6. The method according to claim 5, wherein the first weight vector is determined according to a filter feature selection method, and the second weight vector is determined according to an embedded feature selection method.

7. The method according to claim 5 or 6, wherein the determining, based on the first weight vector and the second weight vector, evaluation values respectively corresponding to the plurality of second feature parameters comprises:

> for any piece of sample data, determining, based on a product of the first weight vector and the second weight vector, evaluation values respectively corresponding to a plurality of second feature parameters in the sample data; and
> averaging evaluation values of the second feature parameters in the plurality of pieces of sample data, and determining the evaluation values respectively corresponding to the plurality of second feature parameters.

8. The method according to any one of claims 5 to 7, wherein the neighbor set of the sample data is determined based on a Manhattan distance between the sample data and other sample data.

9. The method according to any one of claims 5 to 8, wherein the neighbor set of the sample data comprises the sample data, a homogeneous neighbor set of the sample data, and a heterogeneous neighbor set of the sample data.

10. The method according to any one of claims 1 to 9, wherein the target electronic control function is any one of chassis electronic control functions of the vehicle, or the target electronic control function is any one of driver assistance functions of the vehicle.

11. The method according to any one of claims 2 to 10, wherein the feature parameter comprises one or more of the following: a parameter of a brake operation, a parameter of a steering wheel operation, a parameter of an acceleration/deceleration operation, and a vehicle traveling parameter.

12. A driving style recognition apparatus, wherein the apparatus comprises:

> a first obtaining module, configured to obtain driving data in response to a requirement of a target electronic control function of a vehicle, wherein the driving data indicates a driving status of the vehicle; and
> a first determining module, configured to input the driving data to a target driving style model, to determine a driving style matching the target electronic control function, wherein the target driving style model is a driving style model matching the target electronic control function among a plurality of driving style models, and the driving style matching the target electronic control function is used for determining a control policy for the target electronic control function.

13. The apparatus according to claim 12, wherein the target driving style model is obtained through training based on a first feature parameter associated with the target electronic control function and an evaluation value of the first feature parameter, and the evaluation value indicates a degree of importance of the feature parameter during determining of the driving style.

14. The apparatus according to claim 13, wherein the apparatus further comprises:

a second obtaining module, configured to obtain sample data, wherein the sample data comprises a plurality of feature parameters indicating a driving status of the vehicle;
a second determining module, configured to determine, according to a feature selection method, a second feature parameter among the plurality of feature parameters and an evaluation value corresponding to the second feature parameter;
a third determining module, configured to: for any target electronic control function, determine, from the second feature parameter, a first feature parameter associated with the target electronic control function; and
a training module, configured to obtain, through training based on the first feature parameter associated with the target electronic control function and an evaluation value of the first feature parameter, the target driving style model associated with the target electronic control function.

15. The apparatus according to claim 14, wherein the training module is configured to:

determine a weight of a non-dimensionalized first feature parameter based on the evaluation value of the first feature parameter;
perform clustering based on the first feature parameter and the weight of the non-dimensionalized first feature parameter, to obtain a clustering result; and
obtain the target driving style model through training based on the clustering result.

16. The apparatus according to claim 14 or 15, wherein the second determining module is configured to:

separately score feature parameters in a plurality of pieces of sample data, and determine a plurality of second feature parameters in the plurality of pieces of sample data and a first weight vector of the second feature parameters;
for any piece of sample data, separately score second feature parameters in a neighbor set of the sample data, and determine a second weight vector corresponding to a plurality of second feature parameters in the sample data; and
determine, based on the first weight vector and the second weight vector, evaluation values respectively corresponding to the plurality of second feature parameters.

17. The apparatus according to claim 16, wherein the first weight vector is determined according to a filter feature selection method, and the second weight vector is determined according to an embedded feature selection method.

18. The apparatus according to claim 16 or 17, wherein the determining, based on the first weight vector and the second weight vector, evaluation values respectively corresponding to the plurality of second feature parameters comprises:

for any piece of sample data, determining, based on a product of the first weight vector and the second weight vector, evaluation values respectively corresponding to a plurality of second feature parameters in the sample data; and
averaging evaluation values of the second feature parameters in the plurality of pieces of sample data, and determining the evaluation values respectively corresponding to the plurality of second feature parameters.

19. The apparatus according to any one of claims 16 to 18, wherein the neighbor set of the sample data is determined based on a Manhattan distance between the sample data and other sample data.

20. The apparatus according to any one of claims 16 to 19, wherein the neighbor set of the sample data comprises the sample data, a homogeneous neighbor set of the sample data, and a heterogeneous neighbor set of the sample data.

21. The apparatus according to any one of claims 12 to 20, wherein the target electronic control function is any one of chassis electronic control functions of the vehicle, or the target electronic control function is any one of driver assistance functions of the vehicle.

22. The apparatus according to any one of claims 13 to 21, wherein the feature parameter comprises one or more of the following: a parameter of a brake operation, a parameter of a steering wheel operation, a parameter of an acceleration/deceleration operation, and a vehicle traveling parameter.

23. A driving style recognition apparatus, comprising a processor and a memory, wherein

the memory is configured to store a program; and
the processor is configured to execute the program stored in the memory, so that the apparatus implements the method according to any one of claims 1 to 11.

24. A computer-readable storage medium, wherein the computer-readable storage medium stores program instructions, and when the program instructions are executed by a computer, the computer is enabled to implement the method according to any one of claims 1 to 11.

25. A computer program product, comprising program instructions, wherein when the program instructions are executed by a computer, the computer is enabled to implement the method according to any one of claims 1 to 11.

Driving data ⟶

```
┌─────────────────────────────┐
│  ┌───────────────────────┐  │
│  │  Driving style model 1 │  │
│  └───────────────────────┘  │
│  ┌───────────────────────┐  │
│  │  Driving style model 2 │  │
│  └───────────────────────┘  │
│  ┌───────────────────────┐  │
│  │  Driving style model 3 │  │
│  └───────────────────────┘  │
└─────────────────────────────┘
```

⟶ Driving style recognition result

FIG. 1

S201

Obtain driving data in response to a requirement of a target electronic control function of a vehicle

S202

Input the driving data to a target driving style model, to determine a driving style matching the target electronic control function

FIG. 2

S301

Obtain sample data

S302

Determine, according to a feature selection method, a second feature parameter among a plurality of feature parameters and an evaluation value corresponding to the second feature parameter

S303

For any target electronic control function, determine, from the second feature parameter, a first feature parameter associated with the target electronic control function

S304

Obtain, through training based on the first feature parameter associated with the target electronic control function and an evaluation value of the first feature parameter, a target driving style model associated with the target electronic control function

FIG. 3

S401

Separately score feature parameters in a plurality of pieces of sample data, and determine a plurality of second feature parameters in the plurality of pieces of sample data and a first weight vector of the second feature parameters

S402

For any piece of sample data, separately score second feature parameters in a neighbor set of the sample data, and determine a second weight vector corresponding to a plurality of second feature parameters in the sample data

S403

Determine, based on the first weight vector and the second weight vector, evaluation values respectively corresponding to the plurality of second feature parameters

FIG. 4

S501

For any piece of sample data, determine, based on a product of a first weight vector and a second weight vector, evaluation values respectively corresponding to a plurality of second feature parameters in the sample data

S502

Average evaluation values of second feature parameters in a plurality of pieces of sample data, and determine evaluation values respectively corresponding to a plurality of second feature parameters

FIG. 5

FIG. 6

S701

Determine a weight of a non-dimensionalized first feature parameter based on an evaluation value of a first feature parameter

S702

Perform clustering based on the first feature parameter and the weight of the non-dimensionalized first feature parameter, to obtain a clustering result

S703

Obtain a target driving style model through training based on the clustering result

FIG. 7

Vehicle speed

Steering wheel turning angle

Lateral acceleration

Steering wheel turning speed

Longitudinal
acceleration

...          ...

FIG. 8(a)

Vehicle speed

Brake pedal displacement

Longitudinal acceleration

Brake pedal speed

Lateral acceleration

Electric cylinder
pressure buildup rate

FIG. 8(b)

Vehicle speed

Pedal displacement

Longitudinal acceleration

Longitudinal acceleration change rate

Pedal speed

Steering wheel turning angle/turning speed

FIG. 8(c)

901

First obtaining module

902

First determining module

FIG. 9

100

Electronic device

1801

Processor

1802

Memory

Application
program code

1803

Communication
interface

FIG. 10

## INTERNATIONAL SEARCH REPORT

| International application No. |
|---|
| **PCT/CN2023/078813** |

**A.   CLASSIFICATION OF SUBJECT MATTER**

B60W40/09(2012.01)i

According to International Patent Classification (IPC) or to both national classification and IPC

**B.   FIELDS SEARCHED**

Minimum documentation searched (classification system followed by classification symbols)

IPC:B60W

Documentation searched other than minimum documentation to the extent that such documents are included in the fields searched

Electronic data base consulted during the international search (name of data base and, where practicable, search terms used)

CNTXT, ENTXTC, ENTXT, VEN, DWPI, WPABS, CJFD: 驾驶, 风格, 识别, 方法, 目标, 电控, 数据, 模型, 匹配, 控制, driving, style, identification, method, targeting, electrical , control, data, model, match

**C.   DOCUMENTS CONSIDERED TO BE RELEVANT**

| Category* | Citation of document, with indication, where appropriate, of the relevant passages | Relevant to claim No. |
|---|---|---|
| X | CN 111038485 A (SHANDONG UNIVERSITY) 21 April 2020 (2020-04-21) description, paragraphs [0033]-[0134], and figures 1-5 | 1-2, 10-13, 21-25 |
| A | CN 113060146 A (CHINA FAW GROUP CO., LTD.) 02 July 2021 (2021-07-02) entire document | 1-25 |
| A | CN 113065611 A (CHONGQING MILITARY INDUSTRY GROUP CO., LTD.) 02 July 2021 (2021-07-02) entire document | 1-25 |
| A | CN 115366891 A (WUHAN UNIVERSITY OF SCIENCE AND TECHNOLOGY) 22 November 2022 (2022-11-22) entire document | 1-25 |
| A | GB 9500872 D0 (DAIMLER BENZ AG.) 08 March 1995 (1995-03-08) entire document | 1-25 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **02 November 2023** | **13 November 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/078813** |

| Patent document cited in search report | | | Publication date (day/month/year) | Patent family member(s) | | | Publication date (day/month/year) |
| --- | --- | --- | --- | --- | --- | --- | --- |
| CN | 111038485 | A | 21 April 2020 | None | | | |
| CN | 113060146 | A | 02 July 2021 | None | | | |
| CN | 113065611 | A | 02 July 2021 | None | | | |
| CN | 115366891 | A | 22 November 2022 | None | | | |
| GB | 9500872 | D0 | 08 March 1995 | DE | 4401416 | A1 | 20 July 1995 |
| | | | | FR | 2715112 | A1 | 21 July 1995 |
| | | | | GB | 2285876 | A | 26 July 1995 |

Form PCT/ISA/210 (patent family annex) (July 2022)